# EUROPEAN PATENT SPECIFICATION

(11) **EP 3 712 063 B1**
(45) Date of publication and mention of the grant of the patent: **27.07.2022**
(21) Application number: 20169878.4
(22) Date of filing: 22.09.2017
(51) Int. Cl.: B64C 27/14, B64D 35/00, B64C 27/12, F16H 57/04

(54) **AIRCRAFT DRIVE SYSTEM**
FLUGZEUGANTRIEBSSYSTEM
SYSTÈME DE TRANSMISSION POUR AÉRONEF

(30) Priority: 23.09.2016 US 201662399097 P; 17.11.2016 US 201662423371 P; 13.09.2017 US 201715702912
(43) Date of publication of application: 23.09.2020
(62) Divisional of application: 17192698.3
(73) Proprietor: Textron Innovations Inc., Providence, Rhode Island 02903 (US)
(72) Inventor: POSTER, Scott David, Arlington, TX 76016 (US); RILEY, Walter, Fort Worth, TX 76101 (US); COPE, Gary, Keller, TX 76248 (US); SPELLER JR, Charles Hubert, Flower Mound, TX 75028 (US)
(74) Representative: Barker Brettell LLP

(56) References cited:
- EP-A1- 0 739 815
- EP-A1- 2 412 995
- US-A- 4 479 619
- US-A1- 2006 266 883
- Anonymous: "Sikorsky Archives | S-65/H-53A/D Sea Stallion/ H-53E Super Stallion", , 31 July 2013 (2013-07-31), XP055591783, Retrieved from the Internet: URL:https://www.sikorskyarchives.com/S-65H -53D%20SEA%20STALLION.php [retrieved on 2019-05-24]
- XP055592953

## Description

### CROSS-REFERENCE TO RELATED APPLICATIONS

This patent application claims priority to U.S. provisional patent application serial number 62/399,097 filed on September 23, 2016 entitled "Improved Helicopter Transmission System" and U.S. provisional patent application serial number 62/423,371 filed on November 17, 2016 entitled "Improved Helicopter Transmission System,".

### TECHNICAL FIELD OF THE INVENTION

The present invention relates to an aircraft drive system, a method of providing redundant power to a main rotor gearbox, and a helicopter.

### BACKGROUND OF THE INVENTION

Without limiting the scope of the invention, its background is described in connection with rotorcraft drive systems.

Since their inception, rotorcraft and rotorcraft drive systems have been improved to reduce the possibility of failure during flight. Toward that end, a number of modifications have been made to drive systems to improve reliability. However, despite advances in materials and design, a number of failures continue to occur that affect rotorcraft performance. One example of a problem with current rotorcraft drive systems is that, in some instances, the failure of single drive system component leads to failure of the entire drive system. Another example is a loss of lubrication event that causes the loss of torque transmission by drive system subcomponents such as gearboxes or accessories connected to the main rotor gearbox.

More particularly, the failure of a single gearbox or shaft connected to the main rotor gearbox can significantly impact operations. For example, if there is a loss of lubrication to a gearbox, the gearbox loses torque transmission, causing damage to upstream or downstream components. The same can occur when a shaft becomes unbalanced (or breaks), which can damage couplings, gearboxes and even the main rotor gearbox. Unfortunately, when a portion of a drive system experiences a failure or reduction in performance, the concomitant reduction in power leads to challenges with flight performance.

Thus, a need remains for improving the overall safety and reliability of rotorcraft drive systems that include the connections between the engines and the main rotor gearbox, reduction and accessory gearboxes, shafts, generators, oil pumps, and accessories connected to the main rotor gearbox. Specifically, systems and methods that minimize the number of single load path components, provide maximum system separation and redundancy, minimize maintenance required and maintenance related incidents, minimize the potential of loss of lubrication events, and maximize main rotor gearbox loss of lubrication capability are desirable, including systems and methods for cooling components and systems during normal operations and during loss of lubrication events.

"Sikorsky Archives | S-65/H-53A/D Sea Stallion/ H-53E Super Stallion", as retrieved from https://www.sikorskyarchives.com/S-65H-53D%20SEA%20STALLION.php on 24 May 2019, discloses two transmission systems each comprising a main gearbox and an accessory gearbox.

"Helicopter Drive System On-Condition Maintenance Capability", published by Sikorsky Aircraft Division of United Technologies Corporation in July 1976, discloses a transmission system comprising a main gearbox and an accessory gearbox.

US2006266883 discloses a gearbox of a high speed compound rotary-wing aircraft including a main module, an input module and a translational thrust module. The input module receives power from the engines to drive a dual, contra-rotating, coaxial main rotor system and a translational thrust system which provides significant translational thrust generally parallel to an aircraft longitudinal axis. Each of a multiple of engine drives the input module such that power is distributed to the main module and the translational thrust module.

EP2412995 discloses a drive train with a rolling bearing for a shaft, a fixed outer ring, an inner ring rotating relative to said outer ring and at least one intermediate socket mounted on the shaft inside the inner ring. At least one shell is provided between the socket and the inner ring, said shell being provided with a cylindrical outer area of contact to an inner circumferential surface of the inner ring and with at least one lateral extension beyond the area of contact with the inner ring.

US6302356 discloses a twin turbine engine helicopter having a two-stage main reduction gearbox, the input stage having a speed reduction ratio exceeding 5.5:1, into an epicyclic gear train second stage ratio about 6:1 for approximately 30:1 or higher overall ratio output to the main rotor. In various embodiments, the first stage uses face gears, or bevel gears, with a reduction greater than 5.5:1 and a second stage epicyclic gear train using single or double row helical or spur gears. The first stage gears are straddle mounted in the housing.

### SUMMARY OF THE INVENTION

An aspects of the invention is set out according to appended claim 1. Embodiments of the invention are set out according to the appended dependent claims. The first and second engine reduction gearboxes may comprise a plurality of gears that reduce a shaft speed from the first and second engines from a high speed at or near turbine engine speed of greater than 10,000 revolutions per minute at an input of the first and second engine reduction gearboxes, respectively, to a speed substantially lower than the high speed, a low speed of less than about 6,000 revolutions per minute at an output of the first and second engine reduction gearboxes. An output shaft may comprise a tail rotor disc brake and calipers for slowing or stopping the drive system. The main rotor gearbox may comprise a low speed overhung planetary gear system. The drive system may further comprise a drive shaft assembly connected to an output of the main rotor gearbox, wherein the drive shaft assembly comprises one or more drive shafts, each of the drive shafts connected to one or more bearing assemblies, the drive shaft assembly having a proximal and a distal end, and an intermediate gear box connected to the distal end of the one or more drive shafts, wherein the intermediate gear box is connected to a tail rotor gearbox via a tail rotor drive shaft. The drive system may further comprise at least one of: one or more cooling fans, or one or more oil pumps, one or more hydraulic power packs, or one or more generators, each connected directly or indirectly to the main rotor gearbox independently. The drive system may further comprise an oil cooler mounted directly to the main rotor gearbox. The drive system may further comprise two or more hydraulic power packs wherein each of the two or more hydraulic power packs is independent from and redundant with the other hydraulic power packs. The drive system may further comprise two or more oil cooler blowers wherein each of the two or more oil cooler blowers is independent from and redundant with the other oil cooler blowers. The drive system may further comprise two or more generators wherein each of the two or more generators is independent from and redundant with the other generators.

Another aspect of the invention is set out according to appended claim 2. Embodiments of the invention are set out according to the appended dependent claims. The first and second engine reduction gearboxes may comprise a plurality of gears that reduce a shaft speed from the first and second engines from up to a high speed at or near turbine engine speed of greater than 10,000 revolutions per minute at an input of the first and second engine reduction gearboxes, respectively, to a speed substantially lower than the high speed, a low speed of less than about 6,000 revolutions per minute at an output of the first and second engine reduction gearboxes. The method may further comprise connecting a drive shaft with flexible couplings between each of the first and second engine reduction gearboxes and the first and second inputs of the main rotor gearbox, respectively. An output shaft may comprise a tail rotor disc brake and calipers for slowing or stopping the drive system. The main rotor gearbox may comprise a low speed overhung planetary gear system. The method may further comprise connecting a drive shaft assembly to an output of the main rotor gearbox, wherein the drive shaft assembly comprises one or more drive shafts, each of the drive shafts connected to one or more bearing assemblies, the drive shaft assembly having a proximal and a distal end, and an intermediate gear box connected to the distal end of the one or more drive shafts, wherein the intermediate gear box is connected to a tail rotor gearbox via a tail rotor drive shaft. The method may further comprise providing at least one of: one or more cooling fans, or one or more oil pumps, one or more hydraulic power packs, or one or more generators, each connected directly or indirectly to the main rotor gearbox independently. The method may further comprise mounting an oil cooler directly to the main rotor gearbox. The method may further comprise mounting two or more hydraulic power packs wherein each of the two or more hydraulic power packs is independent from and redundant with the other hydraulic power packs. The method may further comprise mounting two or more oil cooler blowers wherein each of the two or more oil cooler blowers is independent from and redundant with the other oil cooler blowers. The method may further comprise mounting two or more generators wherein each of the two or more generators is independent from and redundant with the other generators.

### BRIEF DESCRIPTION OF THE DRAWINGS

For a more complete understanding of the features and advantages of the present invention, reference is now made to the detailed description of the invention along with the accompanying figures and in which:
FIG. 1 shows a side view of a helicopter according to a preferred embodiment of the present application;
FIG. 2 shows a partial cross-section, perspective view of helicopter aircraft according to an alternative embodiment of the present application;
FIG. 3 shows an isometric view of a drive system not falling within the scope of the present invention.
FIG. 4 shows a close-up, isometric view of a fan assembly for use with the drive system of the present invention.
FIG. 5 shows an isometric view of another portion of the drive system that provides system separation and redundancy.
FIG. 6 shows a main rotor gearbox of a helicopter according to an embodiment of the present application

### DETAILED DESCRIPTION OF THE INVENTION

The present invention addresses the problems with drive systems in use today that are known to lead to rotorcraft failure. More particularly, the drive system of the present invention was designed to overcome drive system failures by including one or more of the following design features: (1) minimize the number of single path drive system components; (2) provide maximum system separation and redundancy; (3) minimize maintenance requirements and maintenance related incidents; (4) minimize the potential of loss of lubrication events; and/or (5) maximize main rotor gearbox loss of lubrication capability. The rotorcraft drive system described herein includes, e.g., dual engine reduction gearboxes completely isolated from the remainder of drive system via freewheeling clutches in the main rotor gearbox, dual accessory gearboxes separate from the main rotor gearbox, and the distribution of the gearbox driven accessories among the separate systems, among other improvements.

The present invention was developed to address the failures common to rotorcraft drive systems and is based on a completely new design and application of new technology to rotorcraft safety. More particularly, the new rotorcraft drive system is focused in an unparalleled manner on safety and redundancy. The goal of safety drove the design and development of the unique layout and configuration of the rotorcraft drive system described herein, which incorporates unique features and system separation that protects primary aircraft systems from the most common drive system failures. The drive system has also been designed to maximize the operational capability in the event of an uncommon failure, such as a loss of lubrication.

Moreover, the present inventors recognized that high-speed gearing and the associated heat generation is always an area of concern for gearbox survivability. The ability to continue torque transmission, particularly in a loss of lubrication scenario, is of great importance. For this reason, the drive system described herein includes two separate reduction gearboxes (RGB's), each one connected to a separate engine and independent from the Main Rotor Gearbox (MRGB). The reduction gearboxes are fully self-contained and separate from each other, each reducing the engine output speed from a high speed at or near turbine engine speed of greater than 10,000 RPM to a speed substantially lower than the high speed, a low speed of less than about 6,000 RPM, prior to transmitting torque to the MRGB. With this drive system arrangement high-speed gearing is contained in separate gearboxes, as such, the survivability of the total drive system is greatly enhanced, particularly in the event of high-speed gear failure or loss of lubricant in an individual RGB.

According to one embodiment, the MRGB has additional unique features including the low speed (less than about 6,000 RPM) input. The use of independent RGBs that connect to a single low speed overhung planetary gear system in the MRGB reduces rotating part count and heat generation. Low gear count is achieved by the use of compound gears that incorporate compartmentalized lubrication recovery elements and one or more independent and monitored chip detectors. With maintenance in mind, the drive system allows for a short mast top case assembly that allows swapping of the top case and mast without removal of the main rotor gearbox from the aircraft. The MRGB also includes a clutch for each input of the reduction gearboxes that allows each reduction gearbox to be separately and independently disconnected from the MRGB.

High-speed gearing and the associated heat generation is always an area of concern for gearbox survivability. The ability to continue torque transmission, particularly in a loss of lubrication scenario is of great importance. For this reason, the present invention includes a powertrain for a rotorcraft that includes two separate engine reduction gearboxes (RGB), e.g., one RGB for each engine of a two-engine rotorcraft. The reduction gearboxes are fully self-contained and separate from each other, reducing the engine output speed from a high speed at or near turbine engine speed of greater than 10,000 RPM to a speed substantially lower than the high speed, e.g., a low speed of less than about 6,000 RPM, prior to transmitting torque to the main rotor gearbox (MRGB). This rotational speed reduction is accomplished with, e.g., a simple three (3)-gear reduction. The rotational reduction can be accomplished with 2, 3, 4, 5, 6 or more gears; however, a 3 gear system provided the requisite reduction. Each RGB has its own self-contained lubrication system consisting of pump, filter, oil monitoring sensors, and a unique core in the aircraft cooler assembly.

With this arrangement, where high-speed gearing is contained in separate gearboxes, the survivability of the total drive system is greatly enhanced, particularly in the event of high speed gear failure or loss of lubricant in an individual RGB. Each reduction gearbox can be disconnected from the MRGB by a clutch.

The Main Rotor Gearbox (MRGB) transmits torque from the Reduction Gearboxes (RGB) to the main rotor mast, the hydraulic pump and generator that is mounted to the MRGB, and to the tail rotor drive shaft.

The drive system of the present invention can also take advantage of a number of additional features that minimize the possibility of loss of lubricant and to maximize the operational time if a loss of lubricant event does occur. For example, the drive system can also include one or more of the following: (1) the use of transfer tubes for cooler and filter mounting to eliminate the loss of lubricant in the event of loss of attachment fastener torque; (2) using an oil cooler mounted directly to the main rotor gearbox eliminating external hoses; (3) the use of all oil filter bowls are screw-on instead of held-on with small fasteners eliminating fastener failure issue from repeated removals; (4) the elimination of a high speed planetary and the heat generation associated with it during a loss of lubrication event; (5) the use of gear tooth geometry specifically designed to minimize sliding reducing heat generation at the teeth and the tendency to score during a loss of lubrication event; (6) the use of coarse pitch power gears with clearance or backlash allowing for the expansion during high heat loss of lubrication events; (7) the use of high hot hardness material utilized for primary torque carrying components maximizing their continued operation in the event of a loss of lubrication event; (8) the use of ring gear and case joint design to efficiently transmit heat away from the planetary gears in the event of a loss of lubrication event; and/or (9) the use of isotropic super finished gear teeth resulting in a greatly improved surface finish and maximizing the ability of these gears to operate in a reduced lubrication environment.

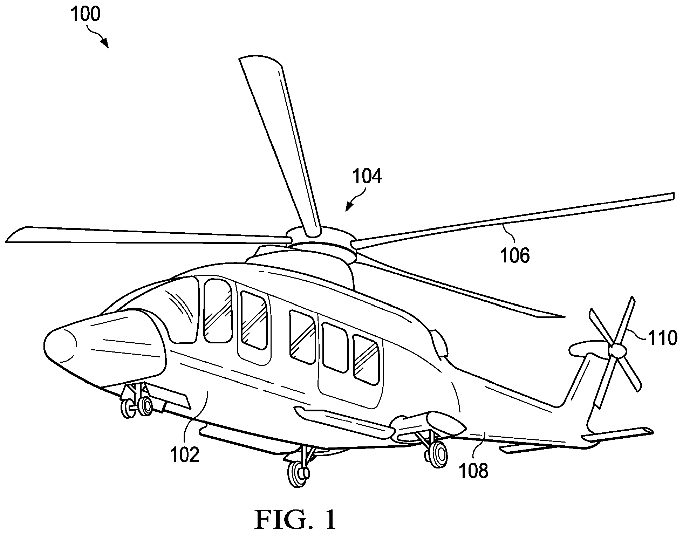

FIG. 1 shows a helicopter 100 in accordance with a preferred embodiment of the present application. In the exemplary embodiment, aircraft 100 is a helicopter having a fuselage 102 and a rotor system 104 carried thereon. A plurality of rotor blades 106 is operably associated with a rotor system 104 for creating flight. A tail boom 108 is depicted that further includes tail rotor 110.

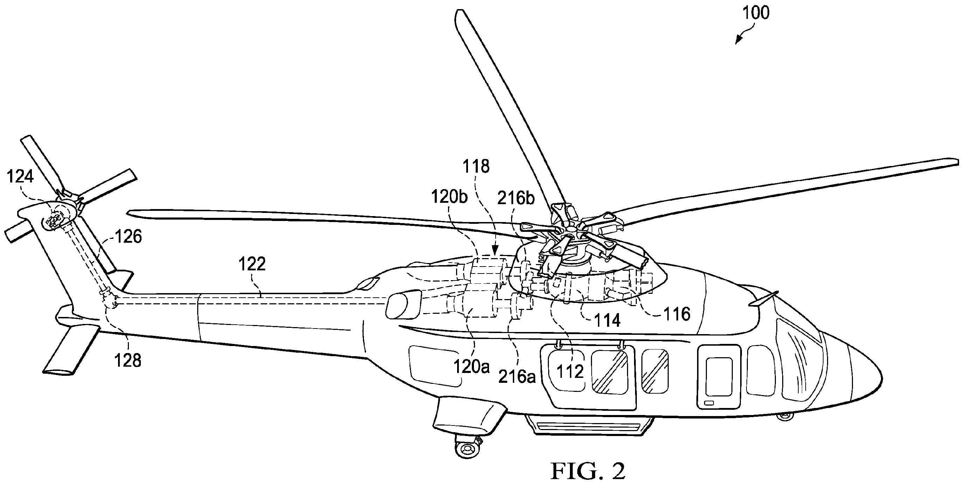

For example, FIG. 2 shows a partial cross-section perspective view of helicopter 100 that includes additional detail of an embodiment of the present invention. Helicopter 100 further includes a rotor mast 112, which is connected to the main rotor gearbox 114. The main rotor gearbox 114 is connected to one or more accessory gear boxes 116 and one or more engine reduction gearboxes 216a, 216b. Each engine reduction gearbox 216a, 216b is connected to one or more engines 120a, 120b, which are within an engine compartment 118. A tail rotor drive shaft 122 transmits mechanical rotation from the main rotor gearbox 114 to the tail rotor gear box 124, which is connected via tail rotor drive shaft 126 and intermediate gear box 128.

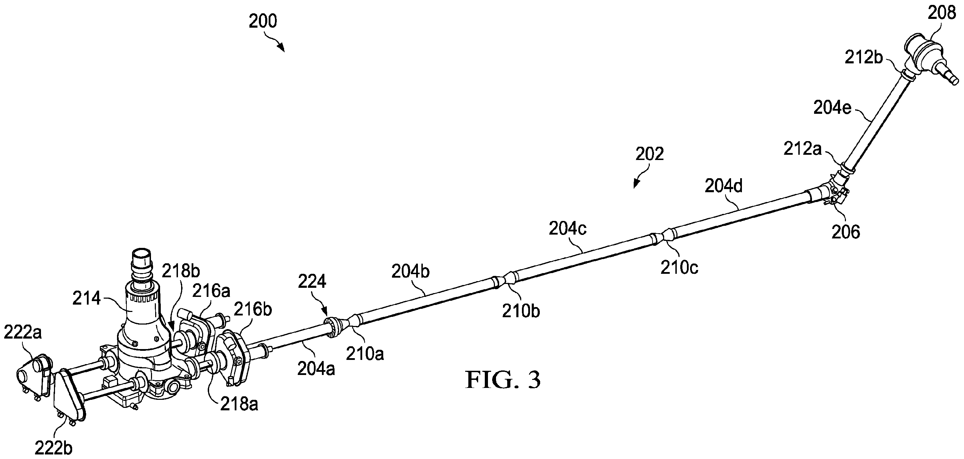

FIG. 3 shows a drive system 200 that includes a drive shaft assembly 202 that includes multiple drive shafts 204a, 204b, 204c, and 204d. Drive system 200 can also include a tail rotor drive shaft 204e. The drive shafts may be made from composite material, aluminum, titanium, or the like. In one example, drive shaft 204a is an aluminum driveshaft while the remaining drive shafts 204b, 204c, 204d, and 204e are composite drive shafts. Aluminum might be selected for the drive shaft 204a nearest the engines in order to maintain mechanical integrity in a high temperature environment, including, for instance, in the event of an engine fire. In another example, drive shafts 204a, 204b, 204c, 204d, and 204e are composite drive shafts. The drive shafts 204a, 204b, 204c, and 204d of drive shaft assembly 202 are connected by assemblies 210a, 210b, 210c (e.g., flexible couplings and hanger bearing assemblies) within the tail boom and under the engine(s). Where one or more of the drive shafts 204a, 204b, 204c, 204d, and 204e are composite drive shafts, a fan assembly 224 may be integrated into one or more connection assemblies 210a, 210b, 210c. For instance, where the drive shaft 204a nearest the engines is composite, a fan assembly 224 may be integrated into connection assembly 210a to provide air flow around drive shaft 204a in order to reduce the temperatures to which drive shaft 204a is normally exposed or to reduce the temperatures under abnormal conditions (e.g., in the event of an engine fire).

The drive shaft assembly 202 is connected at a distal end to an intermediate gearbox 206, which is connected to tail rotor gearbox 208 via drive shaft 204e and flexible couplings 212a, 212b. The proximal end of the drive shaft assembly 202 is connected to the main rotor gearbox, which is powered by two engine reduction gearboxes 216a, 216b, thereby providing redundant power to the main rotor gearbox 214 and the drive shaft assembly 202. Each of the engine reduction gearboxes 216a, 216b are sized to provide sufficient power to maintain flight to the main rotor gearbox 214 and to the drive shaft assembly 202 that is connected to the tail rotor gearbox 208. Each of the engine reduction gearboxes 216a, 216b is connected to the main rotor gearbox 214 via main rotor gearbox input shafts 218a, 218b and each of the engine reduction gearboxes 216a, 216b are connected to an engine (not depicted), e.g., a turboshaft engine. The main rotor gearbox input shafts 218a, 218b connect the engine reduction gearboxes 216a, 216b to the main rotor gearbox 214 via, e.g., couplings. The main rotor gearbox 214 is also depicted as also connected to accessory gearboxes 222a, 222b.

The skilled artisan will recognize that the drive system 200 provides a drive system configuration that was designed to: minimize the number of single load path components, provide maximum system separation and redundancy, minimize maintenance required and maintenance related incidents, minimize the potential of loss of lube events, and maximize main rotor gearbox loss of lube capability. Thus, by providing completely independent or redundant engine reduction gearboxes 216a, 216b, the loss of an engine reduction gearbox does not lead to loss of flight power, because each engine reduction gearbox 216a, 216b is completely isolated from the remainder of the drive system via freewheeling clutches located in the main rotor gearbox 214. As such, loss of a single reduction gearbox does not prevent continued safe flight.

More particularly, all the high-speed rotating components are separated from the main rotor gearbox, and are moved into redundant reduction gearboxes. As such, even when there is a failure in a reduction gearbox, such a failure does not impact the main rotor gearbox operation, because even if the failed reduction gearbox loses torque transmission (because of the inclusion of freewheeling clutches in the MRGB) the reduction gearbox still operating will provide sufficient power to maintain flight from the engine associated with the operational reduction gearbox to safely operate and land the aircraft. By moving the high-speed rotating components away from the main rotor gearbox, the time and expense of maintenance to replace a reduction gearbox is greatly reduced as it is no longer necessary to disassemble the main rotor gearbox to replace components during scheduled maintenance or the result of a reduction gearbox failure.

Several key elements of the drive system 200 include the separation of dual engine reduction gearboxes, which are completely isolated from remainder of drive system via freewheeling clutches in the main rotor gearbox. Further, the drive system 200 provides dual accessory gearboxes separate from the main rotor gearbox. In addition, the distribution of the gearbox driven accessories is among the separate systems, thereby providing full redundant systems. Due to the use of redundant and separate power pathways, the failure of some accessories that would otherwise be critical (e.g., loss of hydraulic pumps, cooling blowers, generators, etc.), is overcome by the separate power pathway. Thus, if one accessory gearbox fails, or if one of the accessories associated with an accessory gearbox fails, the remaining redundant accessory gearbox and its associated accessories are designed to provide for safely operating and landing of the aircraft.

The present invention utilises non-pressurized accessory gearboxes. The accessory gearboxes include the gears that connect to an output from the engines. The gearboxes will generally include one or more of the following: an oil level gauge, an oil level sensor, an oil filler cap, and/or a sump chip detector. The housing for the accessory gearboxes can also include provisions for certain outputs, such as: a permanent magnet generator that generates an electrical output, a blower, a generator, or a hydraulic pump. The gears within the accessory gearboxes are sized to provide the necessary speeds and torques required by each gearbox output. Typically, in non-pressurized gearboxes the internal parts of the gearbox are splash lubricated.

In embodiments, the accessory gearboxes have a lubrication system that is independent of the main rotor gearbox's lubrication system. This can decrease the frequency of loss-of-lube events by eliminating leak paths. Specifically, by providing independent lubrication systems for each of the accessory gearboxes, one can eliminate transfer tubes, hoses, and the like that would otherwise be necessary to provide circulation of lubricant between the main rotor gearbox and each of the accessory gearbox. Thus, in embodiments, each of the accessory gearboxes has a non-pressurized lubrication system that is independent of the main rotor gearbox's lubrication system.

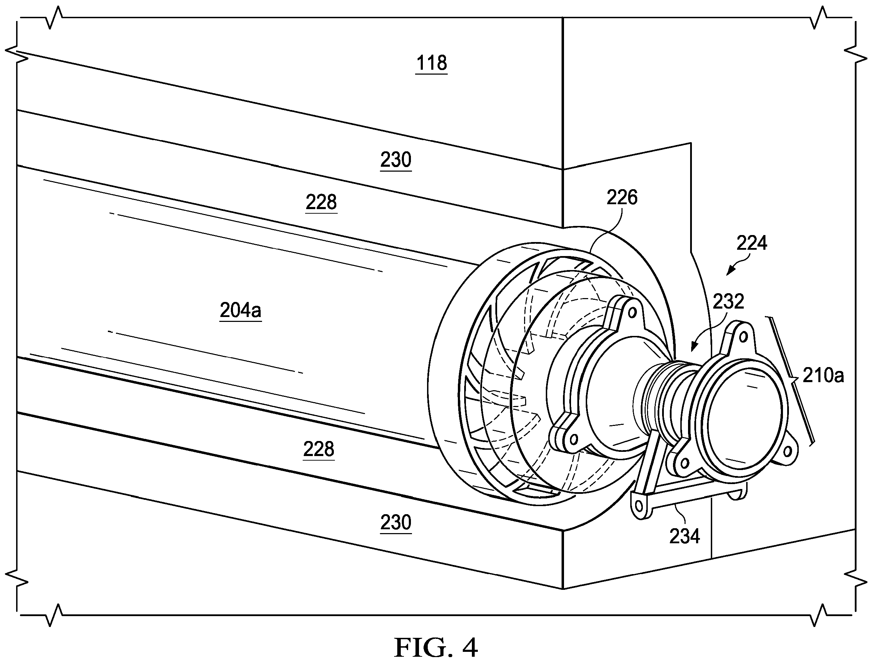

FIG. 4 shows a close-up, isometric view of a fan assembly 224 that is part of the drive system 200. Drive shaft 204a, which is nearest the engines, may be a composite or a metal shaft. The fan assembly 224 includes a fan 226 that may be integrated into connection assembly 210a and provides air flow over and around drive shaft 204a in order to reduce the temperatures to which drive shaft 204a is exposed (e.g., in the event of an engine fire). The drive shaft 204a is depicted within an opening 228 and surrounded by insulation 230, which also protects the drive shaft 204a from heat generated by the engine(s) (not depicted). The connection assembly 210a is depicted with a flexible coupling 232 and a hanger bearing assembly 234.

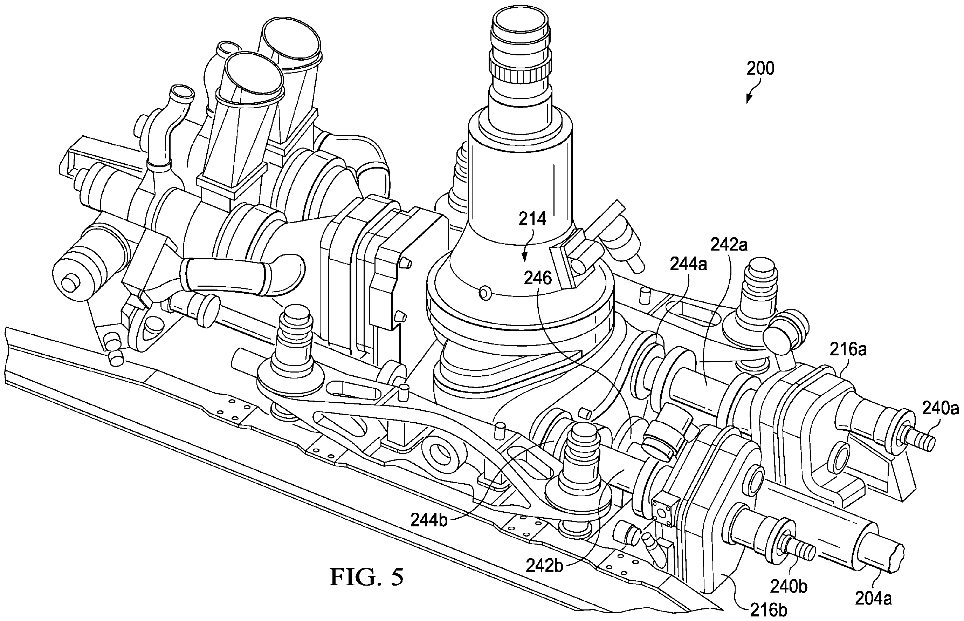

FIG. 5 shows an isometric view of a drive system 200 that provides maximum system separation and redundancy. Drive system 200 include two engine reduction gearboxes 216a, 216b, that are each depicted with an engine connection shaft 240a, 240b. The engine reduction gearboxes 216a, 216b may be connected to one or more accessories, such as a generator, a blower, a pump or other accessory that draws power from the engine reduction gearboxes 216a, 216b. Each of the engine reduction gearboxes 216a, 216b is connected via a separate shaft 242a, 242b, to the main rotor gearbox 214. Thus, each of the engine connection shafts 240a, 240b provides a single drive system from the engines to the main rotor gearbox 214, each of which operates independently and redundantly to provide shaft power to the main rotor gearbox 214. Further, each of the engine reduction gearboxes 216a, 216b reduces the speed of rotation from the engine (e.g., up to a high speed at or near turbine engine speed of greater than 10,000 RPM) to a speed substantially lower than the high speed, a low speed of less than about 6,000 RPM prior to entering the main rotor gearbox 214. Thus, the main rotor gearbox 214 can be designed to operate more reliably, with components that are turning at a much lower speed. The drive system 200 also connects to the tail rotor via a tail rotor shaft 204. Each of the engine connection shafts 240a, 240b can further include, e.g., a clutch, or other mechanisms for connecting and disconnecting the engine reduction gearboxes 216a, 216b from the main rotor gearbox 214. Each of the shafts 242a, 242b can connect via freewheeling clutches 244a, 244b, depicted here on the main rotor gearbox 214, however, the skilled artisan will recognize that the freewheeling clutches 244a, 244b could also be positioned on the engine reduction gearboxes 216a, 216b or even between the engine reduction gearboxes 216a, 216b and the main rotor gearbox 214, or combinations of the same. Further, the shafts 242a, 242b that connect the engine reduction gearboxes 216a, 216b to the main rotor gearbox 214 can include flexible couplings to allow for pylon movement and can be separately uncoupled. For example, clutches can be connected to the shafts 242a, 242b, and/or to an output from the main rotor gearbox 214. In the example of FIG. 4, these shafts 242a, 242b connect directly into the main rotor gearbox 214 at a freewheeling clutch 244a, 244b that allows the engines and reduction gearboxes 216a, 216b to have completely independent torque and speed. That is, in the event of an engine failure, or a loses torque transmission by one of the engine reduction gearboxes 216a, 216b, the associated freewheeling clutch 244a, 244b allows the main rotor gearbox 214 to continue operating at speed, receiving torque from the engine and engine reduction gearbox that remains operable. Further, each freewheeling unit allows for the individual start-up and shutdown of either engine. The shafts 242a, 242b can be, e.g., a one-piece drive shaft with integral couplings and anti-flail protection. The shafts 242a, 242b can be a single material or a composite material. Drive system 200 also includes a tail rotor disc brake 246 and calipers (not shown) for slowing or stopping drive system 200.

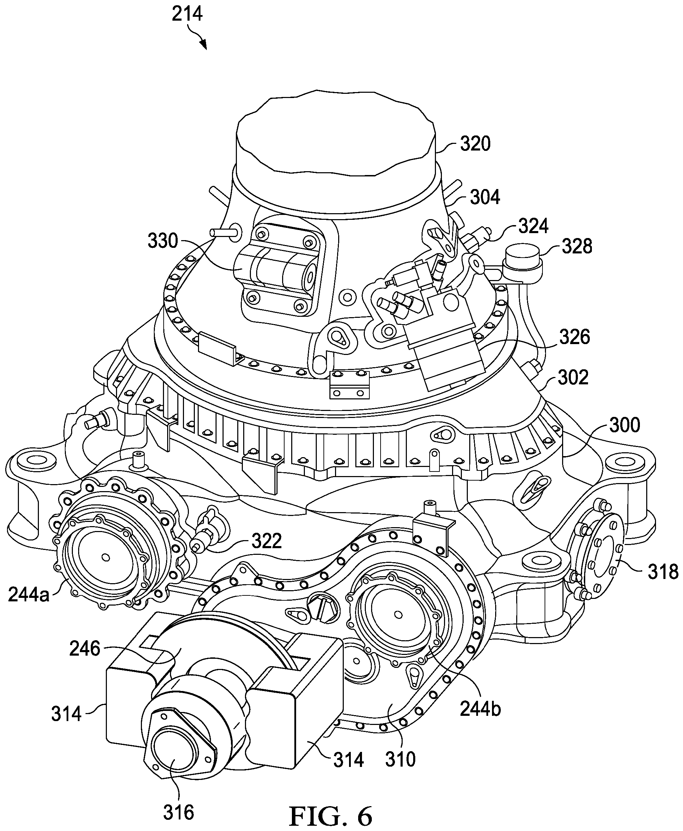

FIG. 6 shows a main rotor gearbox 214 of a helicopter. The main rotor gearbox 214 includes a lower housing 300, a middle housing 302 and an upper housing 304. Main rotor gearbox 214 includes a first drive input and clutch 244a, a second drive input and clutch 244b, a tail rotor gear assembly 310, a tail rotor disc brake 246 and calipers 314, a tail rotor drive output 316, a generator output 318, hydraulic pump drive output (not shown), first accessory drive output (not shown), second accessory drive output (not shown), oil pump drive output (not shown), and mast housing 320. Other features include tail rotor output section chip detector 322, mast bearing chip detector 324, planetary chip detector (not shown), oil filter 326, oil filler cap 328, non-rotating scissor link mounting bracket 330. The first drive input and clutch 244a and second drive input and clutch 244b allow for single engine start and decoupling of either engine/reduction gearbox for single engine operation. Thus, the main gear box 214 minimizes the number of single path drive system components and provides maximum system separation and redundancy.

Non-limiting examples of composite materials for use with the drive shafts include, e.g., metals, carbon fiber, metal-carbon fiber, fiber reinforcement unidirectional layers embedded in the thermoplastic polymer, or combinations thereof. For example, the composite drive shafts may be a composite tube that is a braided fiber and resin transfer molded component. Such components are typically more damage tolerant and have a higher ballistic survivability. The braided fiber may be either a two-dimensional or a three-dimensional braided fiber. However, it should be understood that the composite shaft may also be manufactured by filament winding, fiber placement, or any other processes that are deemed appropriate. The drive shafts can also include end adapters, which can be formed from a metallic material, such as aluminum, titanium, or steel, but may be formed from any other suitable rigid material, including non-metallic material. Composite materials and manufacturing of composite drive shafts are taught in, e.g., U.S. Patent No. 7,335,108.

## Claims

1. An aircraft drive system (200) comprising:
a first engine (120a) and a second engine (120b) a main rotor gearbox (114, 214) comprising a first drive input and a second drive input;
a first drive system comprising a first engine reduction gearbox (216a) connecting the first engine (120a) to the first drive input of the main rotor gearbox (114, 214) at a reduced shaft speed;
a second drive system independent from and redundant with the first drive system, the second drive system comprising a second engine reduction gearbox (216b) connecting the second engine (120b) to the second drive input of the main rotor gearbox (114, 214) at the reduced shaft speed; and two or more accessory gearboxes (116, 222a, 222b) connecting an output of the first engine (120a) or the second engine (120b) with one or more accessories; wherein
a first accessory gearbox (116, 222a) of the two or more accessory gearboxes (116, 222a, 222b) connecting an output of the first engine (120a) or the second engine (120b) with one or more accessories, the first accessory gearbox (116, 222a) having a non-pressurized lubrication system independent from a lubrication system associated with the main rotor gearbox (114, 214); and
a second accessory gearbox (116, 222b) of the two or more accessory gearboxes (116, 222a, 222b) connecting an output of the the first engine (120a) or the second engine (120b) with one or more accessories, the second accessory gearbox (116, 222b) having a non-pressurized lubrication system independent from a lubrication system associated with the main rotor gearbox (114, 214) and from the non-pressurized lubrication system associated with the first accessory gearbox (116, 222a);
wherein the second accessory gearbox (116, 222b) is independent from and redundant with the first accessory gearbox.

2. A method of providing redundant power to a main rotor gearbox (114, 214) comprising:
providing the main rotor gearbox (114, 214) comprising a first drive input and a second drive input;
connecting a first drive system comprising a first engine reduction gearbox (216a) for connecting a first engine (120a) to the first drive input of the main rotor gearbox (114, 214) at a reduced shaft speed;
connecting a second drive system independent from and redundant with the first drive system, the second drive system comprising a second engine reduction gearbox (216b) for connecting a second engine (120b) to the second drive input of the main rotor gearbox (114, 214) at the reduced shaft speed; and
providing two or more accessory gearboxes (116, 222a, 222b);
connecting the two or more accessory gearboxes (116, 222a, 222b) directly to the first engine (120a) or the second engine (120b);
mounting a first accessory gearbox (116, 222a) of the two or more accessory gearboxes (116, 222a, 222b) connecting an output of the first engine (120a) or the second engine (120b) with one or more accessories, the first accessory gearbox (116, 222a) having a non-pressurized lubrication system independent from a lubrication system associated with the main rotor gearbox (114, 214); and
mounting a second accessory gearbox (116, 222b) of the two or more accessory gearboxes (116, 222a, 222b) connecting an output of the first engine (120a) or the second engine (120b) with one or more accessories, the second accessory gearbox (116, 222b) having a non-pressurized lubrication system independent from a lubrication system associated with the main rotor gearbox (114, 214);
wherein the second accessory gearbox (116, 222b) is independent from and redundant with the first accessory gearbox.

3. The drive system of claim 1 or the method of claim 2, further comprising a drive shaft (242a, 242b) connecting each of the first and second engine reduction gearboxes (216a, 216b) to the first and second drive inputs of the main rotor gearbox (114, 214), respectively.

4. The drive system or method of claim 3, wherein the drive shafts (242a, 242b) connect to the first and second engine reduction gearboxes (216a, 216b) or the first and second drive inputs of the main rotor gearbox (114, 214) via freewheeling clutches (244a, 244b).

5. The drive system or method of claim 3, wherein the drive shafts (242a, 242b) have flexible couplings.

6. The drive system of claim 1 or any preceding system claim, or the method of claim 2 or any preceding method claim, wherein each of the first and second engine reduction gearboxes (216a, 216b) is independently lubricated and cooled.

7. The drive system of claim 1 or of any preceding system claim, or the method of claim 2 or of any preceding method claim, wherein each of the first and second engine reduction gearboxes (216a, 216b) are configured to be independently decoupled from the main rotor gearbox (114, 214).

8. The drive system of claim 1 or of any preceding system claim, further comprising a tail rotor gear assembly (310) connected to the main rotor gearbox (114, 214), a tail rotor drive output (316) connected to the tail rotor gear assembly (310) via a tail rotor disc brake (246) and calipers (314), a tail rotor drive shaft (122) connected to the tail rotor drive output (316), and a tail rotor gearbox (124) connected to the tail rotor drive shaft (122) via a tail rotor drive shaft (126, 204e) and an intermediate gearbox (128); or
the method of claim 2 or of any preceding method claim, further comprising connecting a tail rotor gear assembly (310) to the main rotor gearbox (114, 214), connecting a tail rotor drive output (316) to the tail rotor gear assembly (310) via a tail rotor disc brake (246) and calipers (314), connecting a tail rotor drive shaft (122) to the tail rotor drive output (316), and connecting a tail rotor gearbox (124) to the tail rotor drive shaft (122) via a tail rotor drive shaft (126, 204e) and an intermediate gearbox (128).

9. The drive system or method of claim 8, wherein the tail rotor drive shaft (122) comprises a drive shaft assembly (202) having two or more drive shafts (204a, 204b, 204c, 204d) connected to one another via one or more connection assemblies (210a, 210b, 210c).

10. The drive system or method of claim 9, wherein a fan assembly (224) is integrated into one or more of the connection assemblies (210a, 210b, 210c).

11. The drive system or method of claim 9, wherein the one or more connection assemblies (210a, 210b, 210c) comprise flexible couplings and hanger bearing assemblies.

12. The drive system of claim 1 or of any preceding system claim, or
the method of claim 2 or of any preceding method claim, further comprising the one or more accessories, and wherein
the one or more accessories connected to the first accessory gearbox (116, 222a) are independent from and redundant with the one or more accessories connected to the second accessory gearbox (116, 222b).

13. A helicopter (100), comprising:
a fuselage (102);
a drive system (200) according to claim 1 or of any preceding system claim, wherein the drive system (200) is coupled to the fuselage (102); and
a rotor system (104) connected to the main rotor gearbox (114, 214) to provide flight.

## Patentansprüche

1. Luftfahrzeug-Antriebssystem (200), das Folgendes umfasst:
eine erste Kraftmaschine (120a) und eine zweite Kraftmaschine (120b),
ein Hauptrotorgetriebe (114, 214), das einen ersten Antriebseingang und einen zweiten Antriebseingang umfasst;
ein erstes Antriebssystem, das ein erstes Kraftmaschinen-Untersetzungsgetriebe (216a) umfasst, das eine erste Kraftmaschine (120a) mit dem ersten Antriebseingang des Hauptrotorgetriebes (114, 214) mit einer verringerten Wellendrehzahl verbindet;
ein zweites Antriebssystem, das von dem ersten Antriebssystem unabhängig und damit redundant ist, wobei das zweite Antriebssystem ein zweites Kraftmaschinen-Untersetzungsgetriebe (216b) umfasst, das eine zweite Kraftmaschine (120b) mit dem zweiten Antriebseingang des Hauptrotorgetriebes (114, 214) mit der verringerten Wellendrehzahl verbindet; und zwei oder mehr Zusatzgerät-Getriebe (116, 222a, 222b), die einen Ausgang der ersten Kraftmaschine (120a) oder der zweiten Kraftmaschine (120b) mit einem oder mehreren Zusatzgeräten verbinden; wobei
ein erstes Zusatzgerät-Getriebe (116, 222a) der zwei oder mehr Zusatzgerät-Getriebe (116, 222a, 222b) einen Ausgang der ersten Kraftmaschine (120a) oder der zweiten Kraftmaschine (120b) mit einem oder mehreren Zusatzgeräten verbindet, wobei das erste Zusatzgerät-Getriebe (116, 222a) ein druckloses Schmierungssystem aufweist, das von einem Schmierungssystem, das mit dem Hauptrotorgetriebe (114, 214) assoziiert ist, unabhängig ist; und
ein zweites Zusatzgerät-Getriebe (116, 222b) der zwei oder mehr Zusatzgerät-Getriebe (116, 222a, 222b), das einen Ausgang der ersten Kraftmaschine (120a) oder der zweiten Kraftmaschine (120b) mit einem oder mehreren Zusatzgeräten verbindet, wobei das zweite Zusatzgerät-Getriebe (116, 222b) ein druckloses Schmierungssystem aufweist, das von einem Schmierungssystem, das mit dem Hauptrotorgetriebe (114, 214) assoziiert ist, und von dem drucklosen Schmierungssystem, das mit dem ersten Zusatzgerät-Getriebe (116, 222a) assoziiert ist, unabhängig ist;
wobei das zweite Zusatzgerät-Getriebe (116, 222b) von dem ersten Zusatzgerät-Getriebe unabhängig und damit redundant ist.

2. Verfahren zum Bereitstellen von redundanter Leistung an ein Hauptrotorgetriebe (114, 214), das Folgendes umfasst:
Bereitstellen des Hauptrotorgetriebes (114, 214), das einen ersten Antriebseingang und einen zweiten Antriebseingang umfasst;
Verbinden eines ersten Antriebssystems, das ein erstes Kraftmaschinen-Untersetzungsgetriebe (216a) zum Verbinden einer ersten Kraftmaschine (120a) mit dem ersten Antriebseingang des Hauptrotorgetriebes (114, 214) mit einer verringerten Wellendrehzahl umfasst;
Verbinden eines zweiten Antriebssystems, das von dem ersten Antriebssystem unabhängig und damit redundant ist, wobei das zweite Antriebssystem ein zweites Kraftmaschinen-Untersetzungsgetriebe (216b) zum Verbinden einer zweiten Kraftmaschine (120b) mit dem zweiten Antriebseingang des Hauptrotorgetriebes (114, 214) mit einer verringerten Wellendrehzahl umfasst; und
Bereitstellen von zwei oder mehr Zusatzgerät-Getrieben (116, 222a, 222b);
Verbinden der zwei oder mehr Zusatzgerät-Getriebe (116, 222a, 222b) direkt mit der ersten Kraftmaschine (120a) oder der zweiten Kraftmaschine (120b);
Montieren eines ersten Zusatzgerät-Getriebes (116, 222a) der zwei oder mehr Zusatzgerät-Getriebe (116, 222a, 222b), die einen Ausgang der ersten Kraftmaschine (120a) oder
der zweiten Kraftmaschine (120b) mit einem oder mehreren Zusatzgeräten verbinden, wobei das erste Zusatzgerät-Getriebe (116, 222a) ein druckloses Schmierungssystem aufweist, das von einem Schmierungssystem, das mit dem Hauptrotorgetriebe (114, 214) assoziiert ist, unabhängig ist; und
Montieren eines zweiten Zusatzgerät-Getriebes (116, 222b) der zwei oder mehr Zusatzgerät-Getriebe (116, 222a, 222b), das einen Ausgang der ersten Kraftmaschine (120a) oder der zweiten Kraftmaschine (120b) mit einem oder mehreren Zusatzgeräten verbindet, wobei das zweite Zusatzgerät-Getriebe (116, 222b) ein druckloses Schmierungssystem aufweist, das von einem Schmierungssystem, das mit dem Hauptrotorgetriebe (114, 214) assoziiert ist, unabhängig ist;
wobei das zweite Zusatzgerät-Getriebe (116, 222b) von dem ersten Zusatzgerät-Getriebe unabhängig und damit redundant ist.

3. Antriebssystem nach Anspruch 1 oder Verfahren nach Anspruch 2, das weiter eine Antriebswelle (242a, 242b) umfasst, die jedes des ersten und des zweiten Kraftmaschinen-Untersetzungsgetriebes (216a, 216b) jeweils mit dem ersten und dem zweiten Antriebseingang des Hauptrotorgetriebes (114, 214) verbindet.

4. Antriebssystem oder Verfahren nach Anspruch 3, wobei die Antriebswellen (242a, 242b) mit dem ersten und dem zweiten Kraftmaschinen-Untersetzungsgetriebe (216a, 216b) oder dem ersten und dem zweiten Antriebseingang des Hauptrotorgetriebes (114, 214) über Freilaufkupplungen (244a, 244b) verbinden.

5. Antriebssystem oder Verfahren nach Anspruch 3, wobei die Antriebswellen (242a, 242b) biegsame Kopplungen aufweisen.

6. Antriebssystem nach Anspruch 1 oder einem vorstehenden Systemanspruch, oder dem Verfahren nach Anspruch 2 oder einem vorstehenden Anspruch, wobei jedes des ersten und des zweiten Kraftmaschinen-Untersetzungsgetriebes (216a, 216b) unabhängig geschmiert und gekühlt ist.

7. Antriebssystem nach Anspruch 1 oder einem vorstehenden Systemanspruch oder dem Verfahren nach Anspruch 2 oder einem vorstehenden Verfahrensanspruch, wobei jedes des ersten und des zweiten Kraftmaschinen-Untersetzungsgetriebes (216a, 216b) dazu konfiguriert ist, von dem Hauptrotorgetriebe (114, 214) unabhängig entkoppelt zu werden.

8. Antriebssystem nach Anspruch 1 oder einem vorstehenden Systemanspruch, das weiter eine Heckrotor-Getriebeanordnung (310) umfasst, die mit dem Hauptrotorgetriebe (114, 214) verbunden ist, einen Heckrotor-Antriebsausgang (316), der mit der Heckrotor-Getriebeanordnung (310) über eine Heckrotor-Scheibenbremse (246) und Bremssättel (314) verbunden ist, eine Heckrotor-Antriebswelle (122), die mit dem Heckrotor-Antriebsausgang (316) verbunden ist, und ein Heckrotorgetriebe (124), das mit der Heckrotor-Antriebswelle (122) über eine Heckrotor-Antriebswelle (126, 204e) und ein Zwischengetriebe (128) verbunden ist; oder
dem Verfahren nach Anspruch 2 oder einem vorstehenden Systemanspruch, das weiter das Verbinden einer Heckrotor-Getriebeanordnung (310) mit dem Hauptrotorgetriebe (114, 214), das Verbinden eines Heckrotor-Antriebsausgangs (316) mit der Heckrotor-Getriebeanordnung (310) über eine Heckrotor-Scheibenbremse (246) und Bremssättel (314), das Verbinden einer Heckrotor-Antriebswelle (122) mit dem Heckrotor-Antriebsausgang (316) und das Verbinden eines Heckrotorgetriebes (124) mit der Heckrotor-Antriebswelle (122) über eine Heckrotor-Antriebswelle (126, 204e) und ein Zwischengetriebe (128) umfasst.

9. Antriebssystem oder Verfahren nach Anspruch 8, wobei die Heckrotor-Antriebswelle (122) eine Antriebswellenanordnung (202) umfasst, die zwei oder mehr Antriebswellen (204a, 204b, 204c, 204d) aufweist, die miteinander über eine oder mehrere Verbindungsanordnungen (210a, 210b, 210c) verbunden sind.

10. Antriebssystem oder Verfahren nach Anspruch 9, wobei eine Lüfteranordnung (224) in eine oder mehrere der Verbindungsanordnungen (210a, 210b, 210c) eingebaut ist.

11. Antriebssystem oder Verfahren nach Anspruch 9, wobei die eine oder mehreren Verbindungsanordnungen (210a, 210b, 210c) biegsame Kopplungen und Hängelageranordnungen umfassen.

12. Antriebssystem nach Anspruch 1 oder einem vorstehenden Systemanspruch, oder
dem Verfahren nach Anspruch 2 oder einem vorstehenden Verfahrensanspruch, das weiter das eine oder die mehreren Zusatzgeräte umfasst, und wobei
das eine oder die mehreren Zusatzgeräte, die mit dem ersten Zusatzgerät-Getriebe (116, 222a) verbunden sind, von dem einen oder den mehreren Zusatzgeräten, die mit dem zweiten Zusatzgerät-Getriebe (116, 222b) verbunden sind, unabhängig und damit redundant sind.

13. Helikopter (100), der Folgendes umfasst:
einen Rumpf (102);
ein Antriebssystem (200) nach Anspruch 1 oder einem vorstehenden Systemanspruch, wobei das Antriebssystem (200) mit dem Rumpf (102) gekoppelt ist; und
ein Rotorsystem (104), das mit dem Hauptrotorgetriebe (114, 214) verbunden ist, um Flugfähigkeit bereitzustellen.

## Revendications

1. Système d'entraînement pour aéronef (200) comprenant :
un premier moteur (120a) et un second moteur (120b)
une boîte de transmission de rotor principal (114, 214) comprenant une première entrée d'entraînement et une seconde entrée d'entraînement ;
un premier système d'entraînement comprenant une boîte de réduction de premier moteur (216a) reliant le premier moteur (120a) à la première entrée d'entraînement de la boîte de transmission du rotor principal (114, 214) à une vitesse d'arbre réduite ;
un second système d'entraînement indépendant du premier système d'entraînement et redondant par rapport à celui-ci, le second système d'entraînement comprenant une boîte de réduction de second moteur (216b) reliant le second moteur (120b) à la seconde entrée d'entraînement de la boîte de transmission du rotor principal (114, 214) à la vitesse d'arbre réduite ; et deux boîtes de transmission d'accessoires (116, 222a, 222b) ou plus reliant une sortie du premier moteur (120a) ou du second moteur (120b) avec un ou plusieurs accessoires ; dans lequel
une première boîte de transmission d'accessoire (116, 222a) des deux boîtes de transmission d'accessoires (116, 222a, 222b) ou plus reliant une sortie du premier moteur (120a) ou du second moteur (120b) avec un ou plusieurs accessoires, la première boîte de transmission d'accessoire (116, 222a) présentant un système de lubrification non pressurisé indépendant d'un système de lubrification associé à la boîte de transmission du rotor principal (114, 214) ; et
une seconde boîte de transmission d'accessoire (116, 222b) des deux boîtes de transmission d'accessoires (116, 222a, 222b) ou plus reliant une sortie du premier moteur (120a) ou du second moteur (120b) avec un ou plusieurs accessoires, la seconde boîte de transmission d'accessoire (116, 222b) présentant un système de lubrification non pressurisé indépendant d'un système de lubrification associé à la boîte de transmission du rotor principal (114, 214) et du système de lubrification non pressurisé associé à la première boîte de transmission d'accessoire (116, 222a) ;
dans lequel la seconde boîte de transmission d'accessoire (116, 222b) est indépendante de la première boîte de transmission d'accessoire et redondante par rapport à celle-ci.

2. Procédé de fourniture d'une puissance redondante à une boîte de transmission de rotor principal (114, 214) comprenant :
la fourniture de la boîte de transmission de rotor principal (114, 214) comprenant une première entrée d'entraînement et une seconde entrée d'entraînement ;
le raccordement d'un premier système d'entraînement comprenant une boîte de réduction de premier moteur (216a) pour relier un premier moteur (120a) à la première entrée d'entraînement de la boîte de transmission du rotor principal (114, 214) à une vitesse d'arbre réduite ;
le raccordement d'un second système d'entraînement indépendant du premier système d'entraînement et redondant par rapport à celui-ci, le second système d'entraînement comprenant une boîte de réduction de second moteur (216b) pour relier un second moteur (120b) à la seconde entrée d'entraînement de la boîte de transmission du rotor principal (114, 214) à la vitesse d'arbre réduite ; et
la fourniture de deux boîtes de transmission d'accessoires (116, 222a, 222b) ou plus;
le raccordement des deux boîtes de transmission d'accessoires (116, 222a, 222b) ou plus directement au premier moteur (120a) ou au second moteur (120b) ;
le montage d'une première boîte de transmission d'accessoire (116, 222a) des deux boîtes de transmission d'accessoires (116, 222a, 222b) ou plus reliant une sortie du premier moteur (120a) ou
du second moteur (120b) à un ou plusieurs accessoires, la première boîte de transmission d'accessoire (116, 222a) présentant un système de lubrification non pressurisé indépendant d'un système de lubrification associé à la boîte de transmission du rotor principal (114, 214) ; et
le montage d'une seconde boîte de transmission d'accessoire (116, 222b) des deux boîtes de transmission d'accessoires (116, 222a, 222b) ou plus reliant une sortie du premier moteur (120a) ou du second moteur (120b) avec un ou plusieurs accessoires, la seconde boîte de transmission d'accessoire (116, 222b) présentant un système de lubrification non pressurisé indépendant d'un système de lubrification associé à la boîte de transmission du rotor principal (114, 214) ;
dans lequel la seconde boîte de transmission d'accessoire (116, 222b) est indépendante de la première boîte de transmission d'accessoire et redondante par rapport à celle-ci.

3. Système d'entraînement selon la revendication 1 ou procédé selon la revendication 2, comprenant en outre un arbre d'entraînement (242a, 242b) reliant chacune des boîtes de réduction du premier moteur et du second moteur (216a, 216b) aux première et seconde entrées d'entraînement de la boîte de transmission du rotor principal (114, 214), respectivement.

4. Système d'entraînement ou procédé selon la revendication 3, dans lequel les arbres d'entraînement (242a, 242b) se relient aux boîtes de réduction du premier moteur et du second moteur (216a, 216b) ou aux première et seconde entrées d'entraînement de la boîte de transmission du rotor principal (114, 214) via des embrayages libres (244a, 244b).

5. Système d'entraînement ou procédé selon la revendication 3, dans lequel les arbres d'entraînement (242a, 242b) présentent des accouplements flexibles.

6. Système d'entraînement selon la revendication 1 ou une quelconque revendication de système précédente, ou procédé selon la revendication 2 ou une quelconque revendication de procédé précédente, dans lequel chacune des boîtes de réduction du premier moteur et du second moteur (216a, 216b) est lubrifiée et refroidie indépendamment.

7. Système d'entraînement selon la revendication 1 ou une quelconque revendication de système précédente, ou procédé selon la revendication 2 ou une quelconque revendication de procédé précédente, dans lequel chacune des boîtes de réduction du premier moteur et du second moteur (216a, 216b) est configurée de façon à être désaccouplée indépendamment de la boîte de transmission du rotor principal (114, 214).

8. Système d'entraînement selon la revendication 1 ou une quelconque revendication de système précédente, comprenant en outre un ensemble d'engrenage de rotor de queue (310) relié à la boîte de transmission du rotor principal (114, 214), une sortie d'entraînement de rotor de queue (316) reliée à l'ensemble d'engrenage de rotor de queue (310) par l'intermédiaire d'un frein à disque de rotor de queue (246) et d'étriers (314), un arbre d'entraînement de rotor de queue (122) relié à la sortie d'entraînement de rotor de queue (316), et une boîte de transmission de rotor de queue (124) reliée à l'arbre d'entraînement de rotor de queue (122) par l'intermédiaire d'un arbre d'entraînement de rotor de queue (126, 204e) et d'une boîte de transmission intermédiaire (128) ; ou
procédé selon la revendication 2 ou une quelconque revendication de procédé précédente, comprenant en outre le raccordement d'un ensemble d'engrenage de rotor de queue (310) à la boîte de transmission du rotor principal (114, 214), le raccordement d'une sortie d'entraînement de rotor de queue (316) à l'ensemble d'engrenage de rotor de queue (310) par l'intermédiaire d'un frein à disque de rotor de queue (246) et d'étriers (314), le raccordement d'un arbre d'entraînement de rotor de queue (122) à la sortie d'entraînement de rotor de queue (316), et le raccordement d'une boîte de transmission de rotor de queue (124) à l'arbre d'entraînement de rotor de queue (122) par l'intermédiaire d'un arbre d'entraînement de rotor de queue (126, 204e) et d'une boîte de transmission intermédiaire (128).

9. Système d'entraînement ou procédé selon la revendication 8, dans lequel l'arbre d'entraînement de rotor de queue (122) comprend un ensemble d'arbres d'entraînement (202) présentant deux arbres d'entraînement (204a, 204b, 204c, 204d) ou plus reliés les uns aux autres par l'intermédiaire d'un ou plusieurs ensembles de raccordement (210a, 210b, 210c).

10. Système d'entraînement ou procédé selon la revendication 9, dans lequel un ensemble de ventilateurs (224) est intégré dans un ou plusieurs des ensembles de raccordement (210a, 210b, 210c).

11. Système d'entraînement ou procédé selon la revendication 9, dans lequel les un ou plusieurs ensembles de raccordement (210a, 210b, 210c) comprennent des accouplements flexibles et des ensembles paliers de suspension.

12. Système d'entraînement selon la revendication 1 ou une quelconque revendication de système précédente, ou
procédé selon la revendication 2 ou une quelconque revendication de procédé précédente, comprenant en outre les un ou plusieurs accessoires, et dans lequel
les un ou plusieurs accessoires reliés à la première boîte de transmission d'accessoire (116, 222a) sont indépendants des un ou plusieurs accessoires reliés à la seconde boîte de transmission d'accessoire (116, 222b) ou redondants par rapport à celle-ci.

13. Hélicoptère (100), comprenant :
un fuselage (102) ;
un système d'entraînement (200) selon la revendication 1 ou une quelconque revendication de système précédente, dans lequel le système d'entraînement (200) est couplé au fuselage (102) ; et
un système de rotors (104) relié à la boîte de transmission du rotor principal (114, 214) pour permettre le vol.
